# EUROPÄISCHE PATENTSCHRIFT

(11) **EP 3 906 614 B1**
(45) Veröffentlichungstag und Bekanntmachung des Hinweises auf die Patenterteilung: **15.01.2025**
(21) Anmeldenummer: 20710543.8
(22) Anmeldetag: 17.03.2020
(51) Int. Cl.: H02M 7/483

(54) **UMRICHTER, ANORDNUNG MIT EINEM UMRICHTER UND VERFAHREN ZU DEREN BETRIEB**
INVERTER, ASSEMBLY WITH AN INVERTER AND METHOD FOR OPERATING THE SAME
CONVERTISSEUR, DISPOSITIF DOTÉ D'UN CONVERTISSEUR ET SON PROCÉDÉ DE FONCTIONNEMENT

(30) Priorität: 02.04.2019 EP 19166799
(43) Veröffentlichungstag der Anmeldung: 10.11.2021
(73) Patentinhaber: Innomotics GmbH, 90441 Nürnberg (DE)
(72) Erfinder: PIESCHEL, Martin, 90518 Altdorf (DE); SCHUSTER, Dominik, 91456 Diespeck (DE)
(74) Vertreter: Siemens Patent Attorneys
(86) Internationale Anmeldenummer: PCT/EP2020/057263
(87) Internationale Veröffentlichungsnummer: WO 2020/200760

(56) Entgegenhaltungen:
- EP-A1- 2 815 913
- WO-A2-2012/152619
- WO-A2-2013/120675
- US-A1- 2018 091 037

## Beschreibung

Die Erfindung bezieht sich auf Umrichter, Anordnungen mit Umrichter(n) und Verfahren zu deren Betrieb.

Die vorliegende Erfindung bezieht sich unter anderem auf einen Umrichter mit einem Teilkonverter, der aufweist: teilkonvertereigene Einspeisedrehstromanschlüsse zum Anschluss an ein einspeisendes elektrisches Drehstromsystem sowie teilkonvertereigene Ausgabedrehstromanschlüsse, die ein teilkonvertereigenes Ausgabedrehstromsystem bilden, und einen teilkonvertereigenen Sternpunktanschluss zum Kontaktieren eines Sternpunkts des teilkonvertereigenen Ausgabedrehstromsystems. Umrichter mit Teilkonverter der beschriebenen Art und somit auch die Teilkonverter als solche sind allgemein bekannt und werden zum Beispiel von der Siemens AG unter der Produktbezeichnung Sinamics Perfect Harmony GH 180 angeboten und vertrieben.

Die WO 2013/120675 A2 offenbart einen modularen Mehrstufenumrichter, bei dem an den Kondensator mindestens eines Submoduls über jeweils einen Wechselrichter mit nachgeordnetem Transformator der mindestens eine elektrische Verbraucher oder elektrische Energieerzeuger angeschlossen ist.

Aus der EP 2 815 913 A1 ist ein Ladesystem für elektrische Fahrzeuge bekannt, bei dem Reihenschaltungen von Submodulen parallelgeschaltet sind, um eine AC-DC-AC-Umwandlung zu ermöglichen.

Ein weiterer modularer Mehrstufenumrichter mit angeschlossenen Energiespeichern ist aus der WO 2012/152619 A2 bekannt.

Der Erfindung liegt die Aufgabe zugrunde, einen Umrichter der beschriebenen Art weiter zu verbessern.

Diese Aufgabe wird erfindungsgemäß durch einen Umrichter mit den Merkmalen gemäß Patentanspruch 1 gelöst. Vorteilhafte Ausgestaltungen des erfindungsgemäßen Umrichters sind in Unteransprüchen angegeben.

Danach ist erfindungsgemäß vorgesehen, dass der Umrichter zumindest einen weiteren Teilkonverter umfasst, der teilkonvertereigene Einspeisedrehstromanschlüsse, teilkonvertereigene Ausgabedrehstromanschlüsse, die ein teilkonvertereigenes Ausgabedrehstromsystem bilden, und einen teilkonvertereigenen Sternpunktanschluss zum Kontaktieren eines Sternpunkts des teilkonvertereigenen Ausgabedrehstromsystems aufweist, die Teilkonverter bezüglich ihrer teilkonvertereigenen Einspeisedrehstromanschlüsse parallelgeschaltet sind und die parallelgeschalteten teilkonvertereigenen Einspeisedrehstromanschlüsse umrichtereigene Einspeisedrehstromanschlüsse zum Anschluss an ein und dasselbe speisende Drehstromsystem bilden, und die Teilkonverter bezüglich ihrer teilkonvertereigenen Ausgabedrehstromanschlüsse parallelgeschaltet sind.

Ein wesentlicher Vorteil des erfindungsgemäßen Umrichters besteht darin, dass dieser bei geeigneter Ansteuerung des Umrichters bzw. der Teilkonverter an den Sternpunktanschlüssen wahlweise eine Gleichspannung oder eine Wechselspannung beliebiger Frequenz erzeugen und einen entsprechenden Gleich- oder Wechselstrom ausgeben kann.

Ein weiterer Vorteil des erfindungsgemäßen Umrichters besteht darin, dass bei entsprechender äußerer Beschaltung der parallelgeschalteten teilkonvertereigenen Ausgabedrehstromanschlüsse darüber hinaus ausgangsseitig zusätzlich auch ein Drehstrom ausgegeben werden kann.

Ein zusätzlicher Vorteil des erfindungsgemäßen Umrichters besteht darin, dass die Teilkonverter ohne eine gemeinsame Zwischenkreisgleichspannung auskommen können.

Vorteilhaft ist es, wenn der eine und der weitere Teilkonverter jeweils pro teilkonvertereigenem Einspeisedrehstromanschluss jeweils ein Konvertermodul aufweisen.

Jedes der Konvertermodule weist vorzugsweise jeweils einen modulseitigen Einspeisedrehstromanschluss, einen modulseitigen Neutralleiteranschluss, einen modulseitigen Ausgabedrehstromanschluss und einen modulseitigen Sternpunktanschluss auf.

Die modulseitigen Neutralleiteranschlüsse der Konvertermodule sind bevorzugt miteinander verbunden und bilden bevorzugt einen teilkonvertereigenen Neutralleiteranschluss des jeweiligen Teilkonverters.

Die modulseitigen Sternpunktanschlüsse der Konvertermodule sind vorzugsweise miteinander verbunden und bilden den teilkonvertereigenen Sternpunktanschluss des jeweiligen Teilkonverters.

Die modulseitigen Einspeisedrehstromanschlüsse bilden bevorzugt jeweils einen der teilkonvertereigenen Einspeisedrehstromanschlüsse des jeweiligen Teilkonverters.

Die modulseitigen Ausgabedrehstromanschlüsse bilden vorzugsweise jeweils einen der teilkonvertereigenen Ausgabedrehstromanschlüsse des jeweiligen Teilkonverters.

Auch ist es vorteilhaft, wenn die Konvertermodule jeweils zwei oder mehr elektrisch in Reihe geschaltete Submodule, einen Transformator mit einer Primärwicklung und pro Submodul jeweils einer Sekundärwicklung aufweisen.

Mit Hilfe des Transformators kann unter anderem eine galvanische Trennung zwischen den teilkonvertereigenen Drehstromanschlüssen und den teilkonvererteigenen Sternpunktanschlüssen realisiert werden. Auch sind die teilkonvertereigenen Drehstromanschlüssen und die teilkonvertereigenen Ausgabedrehstromanschlüssen galvanisch voneinander getrennt, so dass für beide Anschlusssysteme unterschiedliche Bezugspotentiale frei vorgegeben werden können. Die Vorgabe eines Bezugspotentials für die teilkonvertereigenen Ausgabedrehstromanschlüsse kann beispielsweise über einen oder beide der teilkonvertereigenen Sternpunktanschlüssen erfolgen.

Jedes der Submodule ist vorzugsweise eingangsseitig jeweils individuell mit einer der Sekundärwicklungen des Transformators verbunden.

Einer der Anschlüsse der Primärwicklung des Transformators bildet vorzugsweise einen modulseitigen Einspeisedrehstromanschluss und ein anderer Anschluss der Primärwicklung des Transformators vorzugsweise einen modulseitigen Neutralleiteranschluss.

Die Submodule weisen vorzugsweise jeweils ein Gleichrichtermodul, das mit einer dem Submodul zugeordneten Sekundärwicklung des Transformators verbunden ist, ein dem Gleichrichtermodul nachgeordnetes Kondensatormodul und ein dem Kondensatormodul nachgeordnetes Wechselrichtermodul auf.

Die elektrische Reihenschaltung der Submodule beruht vorzugsweise auf der kaskadierten Verschaltung der Wechselspannungsanschlüsse der Wechselrichtermodule.

Die Erfindung bezieht sich außerdem auf eine Umrichteranordnung mit zumindest einem Umrichter wie oben beschrieben.

Vorteilhaft ist es, wenn bei der Umrichteranordnung die parallelgeschalteten teilkonvertereigenen Ausgabedrehstromanschlüsse von außen (extern) zugängliche umrichtereigene Ausgabedrehstromanschlüsse bilden.

An die umrichtereigenen Ausgabedrehstromanschlüsse ist vorzugsweise die Primärseite eines Drei-Auf-Zwei-Einphasentransformators angeschlossen.

Auch ist es vorteilhaft, wenn - alternativ oder zusätzlich - die umrichtereigenen Ausgabedrehstromanschlüsse an die Primärseite eines Transformators angeschlossen sind, der dazu geeignet ist, auf seiner Sekundärseite zwei Wechselspannungen mit einem Phasenversatz von 90 Grad auszugeben.

Zwischen dem teilkonvertereigenen Sternpunktanschluss des einen Teilkonverters und dem teilkonvertereigenen Sternpunktanschluss des zumindest einen weiteren Teilkonverters ist vorzugsweise ein elektrischer Speicher und/oder ein elektrischer Verbraucher, insbesondere ein elektrischer Widerstand, angeschlossen.

Auch ist es vorteilhaft, wenn die Umrichteranordnung einen Generator, insbesondere eine Asynchronmaschine, umfasst, die zumindest zwei generatorseitige Ausgangsdrehstromsysteme zur Verfügung stellt, eines der generatorseitigen Ausgangsdrehstromsysteme mit den umrichtereigenen Einspeisedrehstromanschlüssen verbunden ist und ein anderes generatorseitiges Ausgangsdrehstromsystem mit den umrichtereigenen Ausgabedrehstromanschlüssen verbunden ist.

Bei einer alternativen, ebenfalls als vorteilhaft angesehenen Ausführungsvariante ist vorgesehen, dass die parallelgeschalten teilkonvertereigenen Ausgabedrehstromanschlüsse interne umrichtereigene Ausgabedrehstromanschlüsse bilden und jeder der umrichtereigenen Einspeisedrehstromanschlüsse jeweils mit einem der internen umrichtereigenen Ausgabedrehstromanschlüsse elektrisch verbunden ist.

Die Erfindung bezieht sich außerdem auf ein Verfahren zum Betreiben eines Umrichters, wie er oben beschrieben worden ist. Erfindungsgemäß ist vorgesehen, dass mit einem an die umrichtereigenen Einspeisedrehstromanschlüsse angeschlossenen Einspeisedrehstromsystem ein Drehstrom in den Umrichter eingespeist wird und Submodule in den Teilkonvertern des Umrichters derart angesteuert werden, dass an den die parallelgeschalteten teilkonvertereigenen Ausgabedrehstromanschlüssen ein Ausgabedrehstrom zur Verfügung steht und/oder zwischen den teilkonvertereigenen Sternpunktanschlüssen eine Gleichspannung oder eine einphasige Wechselspannung erzeugt wird.

Die Erfindung wird nachfolgend anhand von Ausführungsbeispielen näher erläutert; dabei zeigen beispielhaft
- FIG 1: ein Ausführungsbeispiel für eine erfindungsgemäße Umrichteranordnung mit einem Ausführungsbeispiel für einen erfindungsgemäßen Umrichter,
- FIG 2: den Umrichter gemäß Figur 1 näher im Detail,
- FIG 3: ein Ausführungsbeispiel für einen Teilkonverter,
- FIG 4: ein Ausführungsbeispiel für ein Konvertermodul,
- FIG 5: ein Ausführungsbeispiel für ein Submodul,
- FIG 6: ein Ausführungsbeispiel für ein Wechselrichtermodul,
- FIG 7: ein weiteres Ausführungsbeispiel für ein Wechselrichtermodul,
- FIG 8: ein Ausführungsbeispiel für ein Kondensatormodul,
- FIG 9: ein Ausführungsbeispiel für ein Gleichrichtermodul,
- FIG 10: ein weiteres Ausführungsbeispiel für eine erfindungsgemäße Umrichteranordnung mit einem Ausführungsbeispiel für einen erfindungsgemäßen Umrichter,
- FIG 11: ein drittes Ausführungsbeispiel für eine erfindungsgemäße Umrichteranordnung mit einem Ausführungsbeispiel für einen erfindungsgemäßen Umrichter und
- FIG 12: ein weiteres Ausführungsbeispiel für einen erfindungsgemäßen Umrichter.

In den Figuren werden der Übersicht halber für identische oder vergleichbare Komponenten stets dieselben Bezugszeichen verwendet.

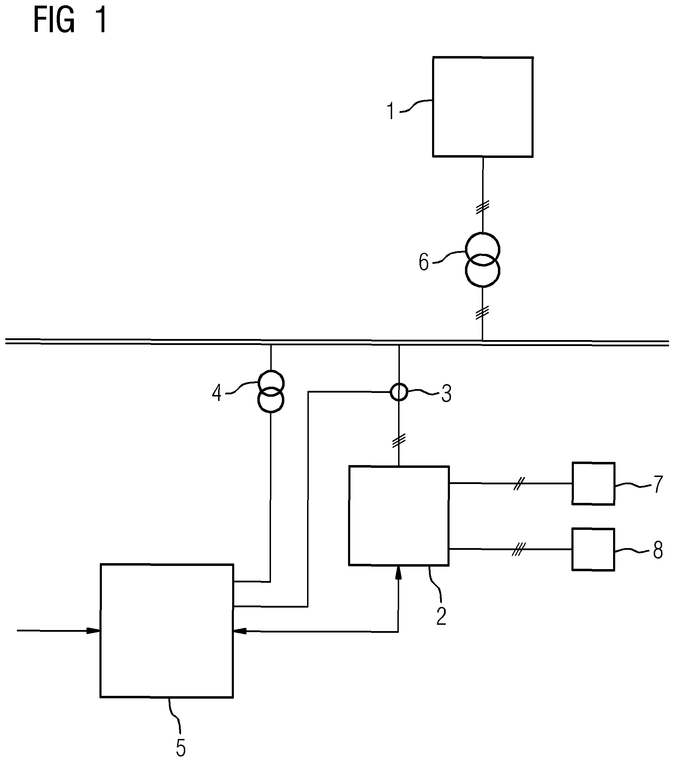

Die FIG 1 zeigt eine Anordnung mit einem Ausführungsbeispiel für einen erfindungsgemäßen Umrichter 2, der über einen Transformator 6 an ein elektrisches Energieversorgungsnetz 1 angeschlossen ist. Es werden der Strom durch den Umrichter 2 mittels einer Strommesseinrichtung 3 und die Anschlussspannung am Umrichter 2 mittels einer Spannungsmesseinrichtung 4 gemessen. Die Messwerte werden von einer Umrichteransteuereinheit 5 verarbeitet, die den Umrichter 2 kontrolliert und ansteuert. An den Umrichter 2 können beispielsweise eine einphasige Last 7 und/oder eine Drehstromlast 8 angeschlossen werden. Bei dem Umrichter 2 handelt es sich vorzugsweise um einen Multilevelumrichter.

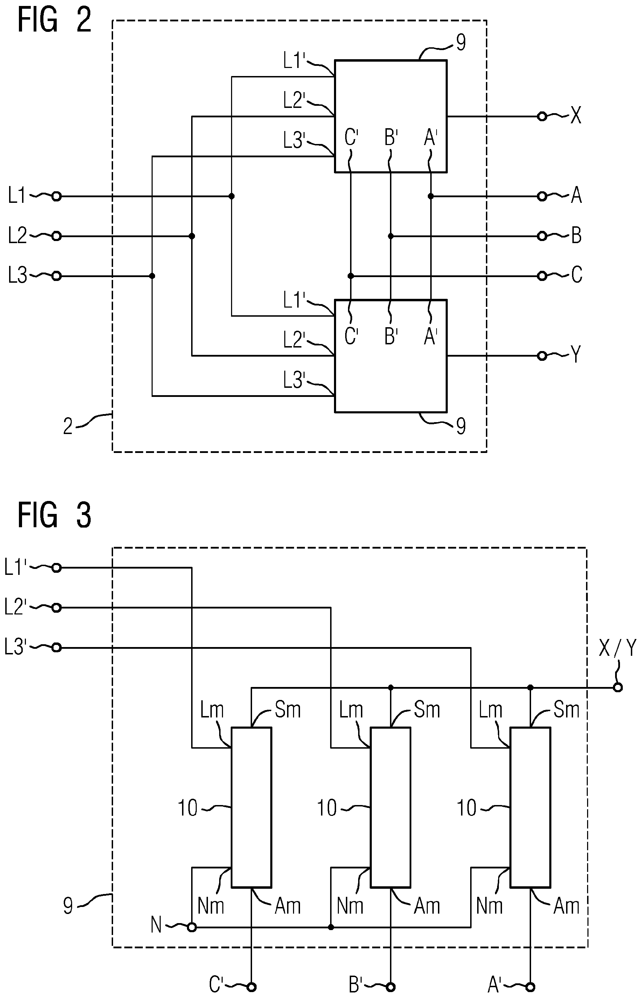

Die FIG 2 zeigt ein Ausführungsbeispiel für den Umrichter 2 gemäß Figur 1 näher im Detail. Der Umrichter 2 umfasst einen ersten Teilkonverter und einen zweiten Teilkonverter. Die beiden Teilkonverter, die in den Figuren mit Bezugszeichen 9 gekennzeichnet sind, sind vorzugsweise baugleich und umfassen jeweils teilkonvertereigene Einspeisedrehstromanschlüsse L1', L2', L3' zum Anschluss an ein einspeisendes elektrisches Drehstromsystem, teilkonvertereigene Ausgabedrehstromanschlüsse A', B', C', die ein teilkonvertereigenes Ausgabedrehstromsystem bilden, und einen teilkonvertereigenen Sternpunktanschluss X bzw. Y zum Kontaktieren eines Sternpunkts des teilkonvertereigenen Ausgabedrehstromsystems.

Die beiden Teilkonverter 9 sind bezüglich ihrer teilkonvertereigenen Einspeisedrehstromanschlüsse L1', L2', L3' parallelgeschaltet. Die parallelgeschalteten teilkonvertereigenen Einspeisedrehstromanschlüsse L1', L2', L3' bilden umrichtereigene Einspeisedrehstromanschlüsse L1, L2, L3 zum Anschluss an ein und dasselbe speisende Drehstromsystem.

Die Teilkonverter 9 sind außerdem bezüglich ihrer teilkonvertereigenen Ausgabedrehstromanschlüsse A', B', C' parallelgeschaltet. Bei der Ausführungsvariante gemäß Figur 2 bilden die teilkonvertereigenen Ausgabedrehstromanschlüsse A', B', C' umrichtereigene Ausgabedrehstromanschlüsse A, B, C, die nach außen geführt sind und von außen zugänglich sind. Die umrichtereigenen Ausgabedrehstromanschlüsse A, B, C gemäß der Figur 2 können somit auch als extern zugängliche, umrichtereigene Ausgabedrehstromanschlüsse A, B, C bezeichnet werden.

Die teilkonvertereigenen Sternpunktanschlüsse X und Y ermöglichen je nach Ansteuerung der Teilkonverter 9 durch die Umrichteransteuereinheit 5 gemäß der Figur 1 eine Ausgabe einer Gleichspannung oder einer einphasigen Wechselspannung. Die Frequenz der einphasigen Wechselspannung ist von der Ansteuerung des Umrichters 2 durch die Umrichteransteuereinheit 5 abhängig und in einem weiten Bereich beliebig von außen einstellbar.

Entsprechendes gilt für die an den umrichtereigenen Ausgabedrehstromanschlüssen A, B, C ausgegebene Drehspannung, deren Frequenz ebenfalls von der Ansteuerung des Umrichters durch die Umrichteransteuereinheit 5 abhängig ist und somit ebenfalls in einem weiten Bereich beliebig von außen einstellbar ist. Die Frequenz der Drehspannung kann sich von der Frequenz der einphasigen Wechselspannung an den Sternpunktanschlüssen X und Y sowie von der Frequenz der Einspeisedrehspannung des speisenden Drehstromsystems an den umrichtereigenen Einspeisedrehstromanschlüssen L1, L2, L3 unterscheiden.

Die FIG 3 zeigt ein Ausführungsbeispiel für den Teilkonverter 9 gemäß Figur 2. Der Teilkonverter 9 weist jeweils pro teilkonvertereigenem Einspeisedrehstromanschluss L1', L2', L3' ein Konvertermodul 10 auf. Jedes der Konvertermodule 10 umfasst jeweils einen modulseitigen Einspeisedrehstromanschluss Lm, einen modulseitigen Neutralleiteranschluss Nm, einen modulseitigen Ausgabedrehstromanschluss Am und einen modulseitigen Sternpunktanschluss Sm. Die modulseitigen Neutralleiteranschlüsse Nm der Konvertermodule 10 sind miteinander verbunden und bilden einen teilkonvertereigenen Neutralleiteranschluss N des Teilkonverters 9.

Die modulseitigen Sternpunktanschlüsse Sm der Konvertermodule 10 sind miteinander verbunden und bilden den teilkonvertereigenen Sternpunktanschluss X bzw. Y des Teilkonverters 9. Die modulseitigen Einspeisedrehstromanschlüsse Lm bilden jeweils einen der teilkonvertereigenen Einspeisedrehstromanschlüsse L1', L2', L3' des Teilkonverters 9. Die modulseitigen Ausgabedrehstromanschlüsse Am bilden jeweils einen der teilkonvertereigenen Ausgabedrehstromanschlüsse A', B', C' des Teilkonverters 9.

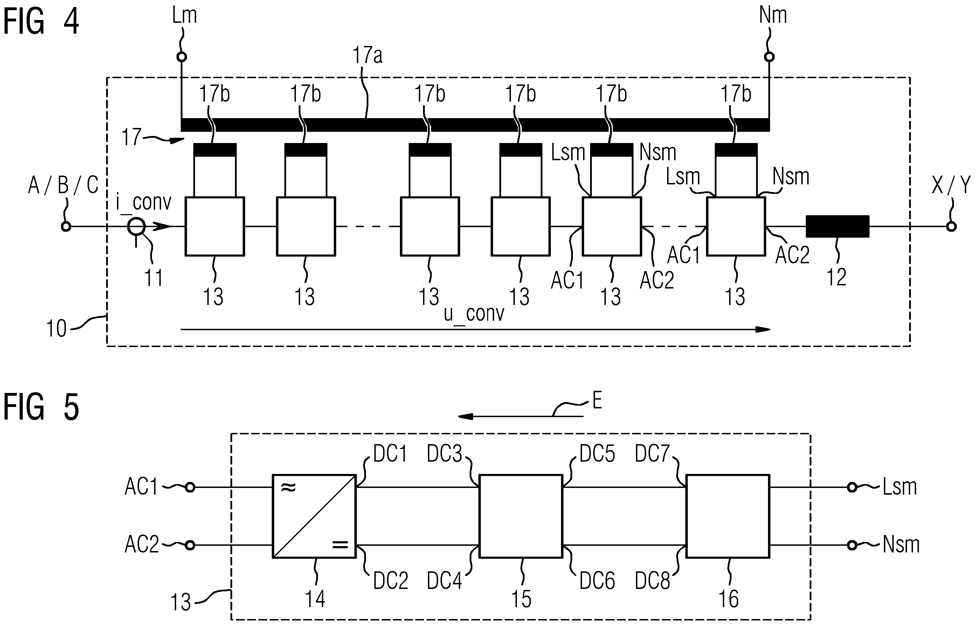

Die FIG 4 zeigt ein Ausführungsbeispiel für das Konvertermodul 10 gemäß FIG 3. Das Konvertermodul 10 weist zwei oder mehr elektrisch in Reihe geschaltete Submodule 13, einen Transformator 17 mit einer Primärwicklung 17a und pro Submodul 13 jeweils einer Sekundärwicklung 17b auf. Jedes der Submodule 13 ist eingangsseitig jeweils individuell mit einer der Sekundärwicklungen 17b des Transformators 17 verbunden.

Einer der Anschlüsse der Primärwicklung 17a des Transformators 17 bildet einen modulseitigen Einspeisedrehstromanschluss Lm und der andere Anschluss der Primärwicklung 17a einen modulseitigen Neutralleiteranschluss Nm.

In Reihe mit den Submodulen 13 liegt außerdem eine Koppelinduktivität 12 und eine Strommesseinrichtung 11, die den Strom i_conv durch das Konvertermodul 10 misst und den Strommesswert vorzugsweise zu der Umrichteransteuereinheit 5 gemäß Figur 1 übermittelt.

Die FIG 5 zeigt ein Ausführungsbeispiel für das Submodul 13 gemäß FIG 4.

Das Submodul 13 weist ein Gleichrichtermodul 16 auf, das mit einer dem Submodul 13 zugeordneten Sekundärwicklung 17b des Transformators 17 verbunden ist und von der Sekundärwicklung 17b gespeist wird; hierzu dienen die Anschlüsse Lsm und Nsm des Submoduls 13.

Das Submodul 13 weist außerdem ein dem Gleichrichtermodul 16 - in Energieflussrichtung bzw. Energiespeiserichtung E gesehen - nachgeordnetes Kondensatormodul 15 und ein dem Kondensatormodul 15 - in Energieflussrichtung E gesehen - nachgeordnetes Wechselrichtermodul 14 auf. Die in der FIG 4 gezeigte elektrische Reihenschaltung der Submodule 13 beruht auf der kaskadierten Verschaltung der Wechselspannungsanschlüsse AC1 und AC2 der Wechselrichtermodule 14. Die innen liegenden Anschlüsse des Gleichrichtermoduls 16, des Kondensatormoduls 15 und des Wechselrichtermoduls 14 sind in der Figur 5 mit den Bezugszeichen DC7 und DC8 (für das Gleichrichtermodul 16), DC3 und DC4 bzw. DC5 und DC6 (für das Kondensatormodul 15) und DC1 und DC2 (für das Wechselrichtermodul 14) bezeichnet.

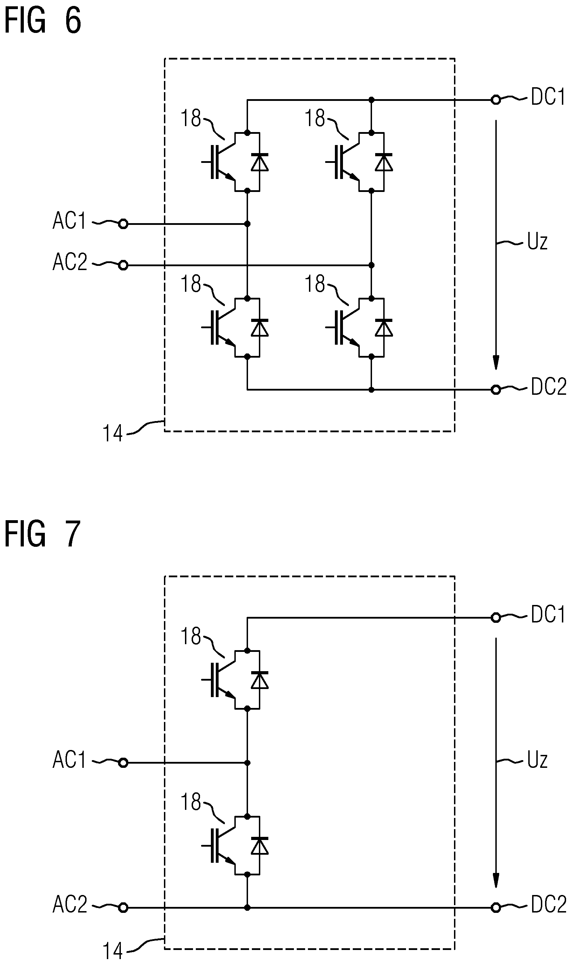

Die FIG 6 zeigt ein Ausführungsbeispiel für ein Wechselrichtermodul 14 gemäß FIG 5. Das Wechselrichtermodul 14 wird durch ein H-Brückenmodul bestehend aus vier Halbleiterschaltern 18 gebildet. Geeignete Halbleiterschalter 18 sind z. B. IGBT, IGCT, IEGT oder MOSFET.

Die FIG 7 zeigt ein weiteres Ausführungsbeispiel für ein Wechselrichtermodul 14 gemäß FIG 5. Das Wechselrichtermodul 14 gemäß FIG 7 wird durch ein Halbbrückenmodul bestehend aus zwei Halbleiterschaltern 18 gebildet. Geeignete Halbleiterschalter 18 sind z.B. IGBT, IGCT, IEGT oder MOSFET.

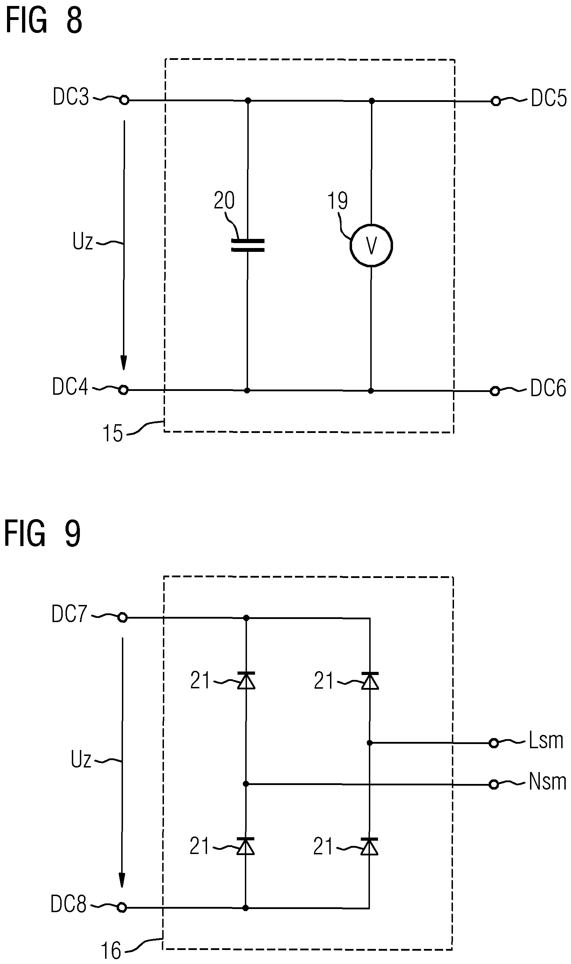

Die FIG 8 zeigt ein Ausführungsbeispiel für das Kondensatormodul 15 gemäß FIG 5. Das Kondensatormodul 15 besteht aus einem Kondensator 20, der eine Zwischenkreisspannung Uz puffert, und einer parallelgeschalteten Spannungsmesseinrichtung 19, die die Zwischenkreisspannung Uz misst und den Spannungsmesswert vorzugsweise zu der Umrichteransteuereinheit 5 gemäß FIG 1 übermittelt.

Die FIG 9 zeigt ein Ausführungsbeispiel für ein Gleichrichtermodul 16 gemäß FIG 5. Das Gleichrichtermodul 16 umfasst vier Dioden 21 zum Gleichrichten einer einphasigen Wechselspannung. Es kann alternativ auch ein dreiphasiger Brückengleichrichter verwendet werden.

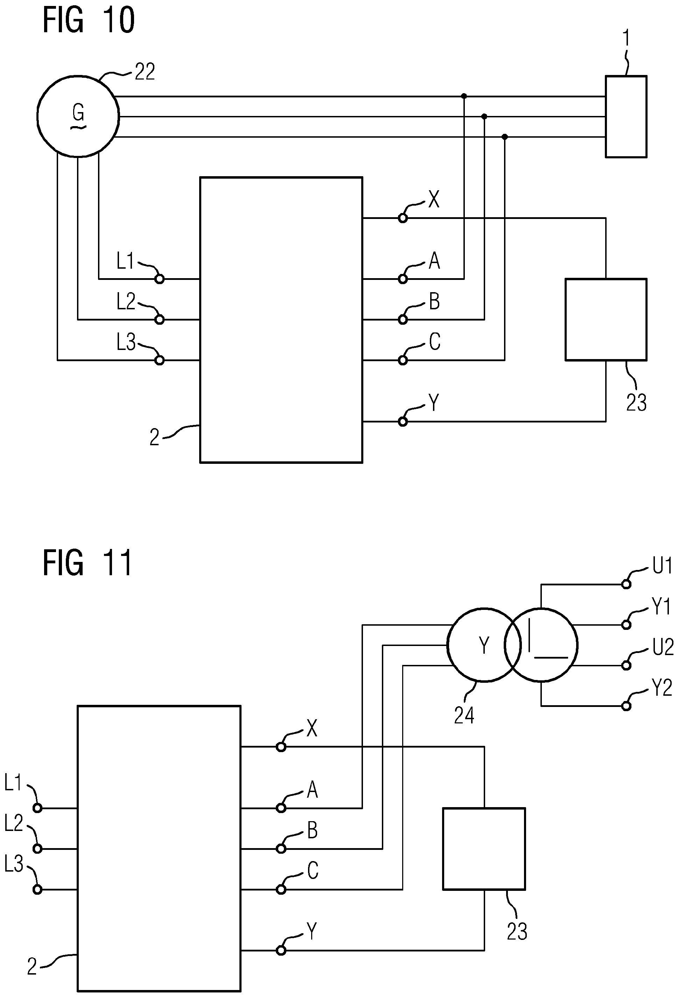

Die FIG 10 zeigt ein weiteres Ausführungsbeispiel für eine Anordnung mit dem Umrichter 2 gemäß FIG 2. Der Umrichter 2 dient zur Kopplung einer doppelt speisenden Asynchronmaschine 22 mit einem elektrischen Energieversorgungsnetz 1.

Die Asynchronmaschine 22 weist eine erste Drehstromwicklung, die an die umrichtereigenen Einspeisedrehstromanschlüsse L1, L2, L3 des Umrichters 2 angeschlossen ist, und eine zweite Drehstromwicklung auf, die gemeinsam (bzw. parallel zu dieser) mit den umrichtereigenen Ausgabedrehstromanschlüssen A, B, C des Umrichters 2 an das Netz 1 angeschlossen ist. An der ersten Drehstromwicklung erzeugt die Asynchronmaschine 22 vorzugsweise eine Drehspannung mit einer Frequenz von beispielsweise zwischen 5 bis 10 Hz; die zweite Drehstromwicklung der Asynchronmaschine 22 wird mit der Drehspannung des speisenden Netzes mit einer Frequenz von beispielsweise 50 Hz versorgt.

Der Umrichter 2 ist an seinen Sternpunktanschlüssen X und Y an einen Widerstand und/oder einen elektrischen Speicher 23 angeschlossen, die zur Aufnahme und/oder Speicherung von Generatorenergie und damit zur Stützung des elektrischen Energieversorgungsnetzes 1 bei Netzfehlern dienen können.

Die FIG 11 zeigt ein drittes Ausführungsbeispiel für eine Anordnung mit dem Umrichter 2 gemäß FIG 2. Mit Energie versorgt wird der Umrichter 2 an seinen umrichtereigenen Einspeisedrehstromanschlüssen L1, L2, L3, an die ein nicht weiter gezeigtes elektrisches Drehstromnetz angeschlossen ist.

Der Umrichter 2 dient zur Speisung beispielsweise eines elektrischen Eisenbahnnetzes und ist zu diesem Zweck mit seinen umrichtereigenen Ausgabedrehstromanschlüssen A, B, C an einen Drei-auf-Zwei-Einphasentransformator 24 angeschlossen. Bei dem Drei-auf-Zwei-Einphasentransformator 24 handelt es sich vorzugsweise um einen Scott- oder LeBlanc Transformator.

Der Drei-auf-Zwei-Einphasentransformator 24 weist ausgangsseitig Anschlüsse U1 und Y1 zur Ausgabe einer ersten Wechselspannung und U2 und Y2 zur Ausgabe einer zweiten Wechselspannung auf. Die erste und zweite Wechselspannung weisen vorzugsweise die gleiche Frequenz von beispielsweise 16 2/3 Hz auf, sind jedoch vorzugsweise um 90 Grad zueinander phasenverschoben.

Der Umrichter 2 ist an seinen Sternpunktanschlüssen X und Y an einen Widerstand und/oder einen elektrischen Speicher 23 angeschlossen, die zur Aufnahme und/oder Speicherung von Generatorenergie und damit zur Stützung der Bahnnetzseite bzw. des elektrischen Eisenbahnnetzes bei Netzfehlern dienen können.

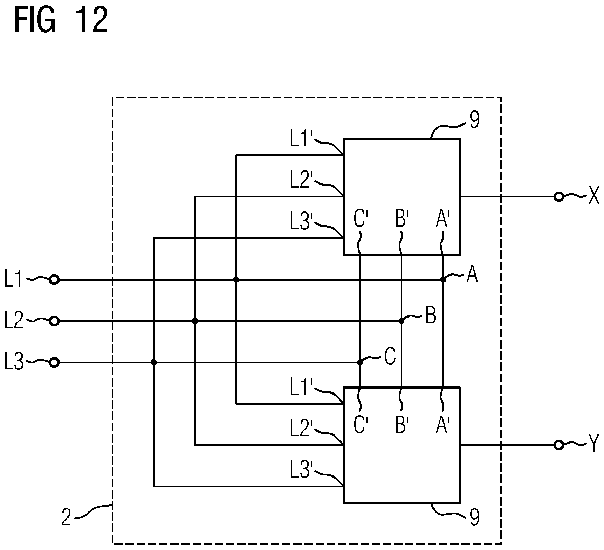

Die FIG 12 zeigt ein weiteres Ausführungsbeispiel für einen erfindungsgemäßen Umrichter 2 näher im Detail. Der Umrichter 2 gemäß FIG 12 umfasst einen ersten Teilkonverter und einen zweiten Teilkonverter und entspricht dem Unmrichter 2 gemäß der FIG 2 mit dem Unterschied, dass die parallelgeschalteten teilkonvertereigenen Ausgabedrehstromanschlüsse A', B', C' interne umrichtereigene Ausgabedrehstromanschlüsse A, B, C bilden, die mit den umrichtereigenen Einspeisedrehstromanschlüssen L1, L2, L3, also den ebenfalls parallelgeschalteten teilkonvertereigenen Einspeisedrehstromanschlüssen L1', L2', L3', verbunden sind.

Von außen zugänglich bzw. beschaltbar sind also die umrichtereigenen Einspeisedrehstromanschlüsse L1, L2, L3 und die teilkonvertereigenen Sternpunktanschlüsse X, Y, die eine Ausgabe einer Gleichspannung oder einer einphasigen Wechselspannung ermöglichen.

Zusammenfassend betrifft die Erfindung einen Umrichter mit einem Teilkonverter, der folgendes aufweist: teilkonvertereigene Einspeisedrehstromanschlüsse zum Anschluss an ein einspeisendes elektrisches Drehstromsystem sowie teilkonvertereigene Ausgabedrehstromanschlüsse, die ein teilkonvertereigenes Ausgabedrehstromsystem bilden, und einen teilkonvertereigenen Sternpunktanschluss zum Kontaktieren eines Sternpunkts des teilkonvertereigenen Ausgabedrehstromsystems. Erfindungsgemäß ist vorgesehen, dass der Umrichter zumindest einen weiteren Teilkonverter umfasst, der teilkonvertereigene Einspeisedrehstromanschlüsse, teilkonvertereigene Ausgabedrehstromanschlüsse, die ein teilkonvertereigenes Ausgabedrehstromsystem bilden, und einen teilkonvertereigenen Sternpunktanschluss zum Kontaktieren eines Sternpunkts des teilkonvertereigenen Ausgabedrehstromsystems aufweist, die Teilkonverter bezüglich ihrer teilkonvertereigenen Einspeisedrehstromanschlüsse parallelgeschaltet sind und die parallelgeschalteten teilkonvertereigenen Einspeisedrehstromanschlüsse umrichtereigene Einspeisedrehstromanschlüsse zum Anschluss an ein und dasselbe speisende Drehstromsystem bilden, und die Teilkonverter bezüglich ihrer teilkonvertereigenen Ausgabedrehstromanschlüsse parallelgeschaltet sind, wobei die Teilkonverter jeweils pro teilkonvertereigenem Einspeisedrehstromanschluss ein Konvertermodul aufweisen und die Konvertermodule jeweils zwei oder mehr elektrisch ausgangsseitig in Reihe geschaltete Submodule, einen Transformator aufweisen.

Die im Zusammenhang mit den Figuren 1 bis 12 beispielhaft beschriebenen Umrichter 2 können, je nach Beschaltung, eine Erzeugung einer Drehspannung sowie zusätzlich die Erzeugung einer Gleich- oder Wechselspannung aus einem eingangsseitigen Drehstromnetz ermöglichen, und zwar mit jeweils beliebiger Ausgangsfrequenz ohne einen gemeinsamen elektrischen Zwischenkreis.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen, welcher durch die folgenden Ansprüche definiert wird.

## Patentansprüche

1. Umrichter (2) mit einem Teilkonverter (9), der aufweist:
- teilkonvertereigene Einspeisedrehstromanschlüsse (L1', L2', L3') zum Anschluss an ein einspeisendes elektrisches Drehstromsystem sowie
- teilkonvertereigene Ausgabedrehstromanschlüsse (A', B', C'), die ein teilkonvertereigenes Ausgabedrehstromsystem bilden, und
- einen teilkonvertereigenen Sternpunktanschluss (X) zum Kontaktieren eines Sternpunkts des teilkonvertereigenen Ausgabedrehstromsystems,
- wobei der
Umrichter (2) zumindest einen weiteren Teilkonverter (9) umfasst, der teilkonvertereigene Einspeisedrehstromanschlüsse (L1', L2', L3'), teilkonvertereigene Ausgabedrehstromanschlüsse (A', B', C'), die ein teilkonvertereigenes Ausgabedrehstromsystem bilden, und einen teilkonvertereigenen Sternpunktanschluss (Y) zum Kontaktieren eines Sternpunkts des teilkonvertereigenen Ausgabedrehstromsystems aufweist, und
- die Teilkonverter (9) bezüglich ihrer teilkonvertereigenen Ausgabedrehstromanschlüsse (A', B', C') parallelgeschaltet sind,
wobei die Teilkonverter (9) bezüglich ihrer teilkonvertereigenen Einspeisedrehstromanschlüsse (L1', L2', L3') parallelgeschaltet sind und die parallelgeschalteten teilkonvertereigenen Einspeisedrehstromanschlüsse (L1', L2', L3') umrichtereigene Einspeisedrehstromanschlüsse (L1, L2, L3) zum Anschluss an ein und dasselbe speisende Drehstromsystem bilden,
- wobei der Teilkonverter (9) und der weitere Teilkonverter (9) jeweils pro teilkonvertereigenem Einspeisedrehstromanschluss ein Konvertermodul (10) aufweisen,
- wobei jedes der Konvertermodule (10) jeweils einen modulseitigen Einspeisedrehstromanschluss (Lm), einen modulseitigen Neutralleiteranschluss (Nm), einen modulseitigen Ausgabedrehstromanschluss (Am) und einen modulseitigen Sternpunktanschluss (Sm) aufweist,
- wobei die Konvertermodule (10) jeweils zwei oder mehr elektrisch ausgangsseitig in Reihe geschaltete Submodule (13), einen Transformator (17) mit einer Primärwicklung (17a) und pro Submodul (13) jeweils einer Sekundärwicklung (17b) aufweisen,
- wobei jedes der Submodule (13) eingangsseitig jeweils individuell mit einer der Sekundärwicklungen des Transformators verbunden ist,
- wobei die Primärwicklungen (17a) der jeweiligen Transformatoren (17) des Teilkonverters (9) und/oder des weiteren Teilkonverters (9) derart in einer Sternschaltung angeordnet und jeweils mit den teilkonvertereigenen Einspeisedrehstromanschlüssen (L1', L2', L3') verbunden sind, dass die modulseitigen Neutralleiteranschlüsse (Nm) der Konvertermodule (10) miteinander verbunden sind und den teilkonvertereigenen Neutralleiteranschluss (N) des jeweiligen Teilkonverters (9) bilden und die modulseitigen Einspeisedrehstromanschlüsse (Lm) jeweils einen der teilkonvertereigenen Einspeisedrehstromanschlüsse (L1', L2', L3') des jeweiligen Teilkonverters (9) bilden,
- wobei die modulseitigen Sternpunktanschlüsse (Sm) der Konvertermodule (10) miteinander verbunden sind und den teilkonvertereigenen Sternpunktanschluss (X,Y) des jeweiligen Teilkonverters (9) bilden,
- wobei die modulseitigen Ausgabedrehstromanschlüsse (Am) jeweils einen der teilkonvertereigenen Ausgabedrehstromanschlüsse (A', B', C') des jeweiligen Teilkonverters (9) bilden.

2. Umrichter (2) nach Anspruch 1,
**dadurch gekennzeichnet, dass**
die teilkonvertereigenen Sternpunktanschlüsse (X, Y) eine Ausgabe einer Gleichspannung oder einer einphasigen Wechselspannung ermöglichen.

3. Umrichter (2) nach einem der voranstehenden Ansprüche, die zwei oder mehr elektrisch ausgangsseitig in Reihe geschaltete Submodule (13) der Konvertermodule (10) zwischen dem modulseitigen Ausgabedrehstromanschluss (Am) und dem modulseitigen Sternpunktanschluss (Sm) angeordnet sind.

4. Umrichter (2) nach einem der Ansprüche 1 bis 3,
**dadurch gekennzeichnet, dass**
- einer der Anschlüsse der Primärwicklung (17a) des Transformators (17) einen modulseitigen Einspeisedrehstromanschluss und
- ein anderer Anschluss der Primärwicklung (17a) des Transformators einen modulseitigen Neutralleiteranschluss bildet.

5. Umrichter (2) nach einem der Ansprüche 1 bis 4,
**dadurch gekennzeichnet, dass**
die Submodule (13) jeweils ein Gleichrichtermodul (16), das mit einer dem Submodul (13) zugeordneten Sekundärwicklung des Transformators verbunden ist, ein dem Gleichrichtermodul (16) nachgeordnetes Kondensatormodul (15) und ein dem Kondensatormodul (15) nachgeordnetes Wechselrichtermodul (14) aufweist.

6. Umrichter (2) nach einem der voranstehenden Ansprüche 1 bis 5,
**dadurch gekennzeichnet, dass**
die elektrische Reihenschaltung der Submodule (13) auf der kaskadierten Verschaltung der Wechselspannungsanschlüsse (AC1, AC2) der Wechselrichtermodule (14) beruht.

7. Umrichteranordnung,
**dadurch gekennzeichnet, dass**
diese mit zumindest einem Umrichter (2) nach einem der voranstehenden Ansprüche ausgestattet ist.

8. Umrichteranordnung nach Anspruch 7,
**dadurch gekennzeichnet, dass**
- die parallelgeschalten teilkonvertereigenen Ausgabedrehstromanschlüsse (A', B', C') umrichtereigene Ausgabedrehstromanschlüsse (A, B, C) bilden und
- an die umrichtereigenen Ausgabedrehstromanschlüsse (A, B, C) die Primärseite eines Drei-Auf-Zwei-Einphasentransformators (24) angeschlossen ist.

9. Umrichteranordnung nach einem der voranstehenden Ansprüche 7 bis 8,
**dadurch gekennzeichnet, dass**
- die parallelgeschalten teilkonvertereigenen Ausgabedrehstromanschlüsse (A', B', C') umrichtereigene Ausgabedrehstromanschlüsse (A, B, C) bilden und
- die umrichtereigenen Ausgabedrehstromanschlüsse (A, B, C) an die Primärseite eines Transformators (24) angeschlossen sind, der dazu geeignet ist, auf seiner Sekundärseite zwei Wechselspannungen mit einem Phasenversatz von 90 Grad auszugeben.

10. Umrichteranordnung nach einem der voranstehenden Ansprüche 7 bis 9,
**dadurch gekennzeichnet, dass**
zwischen dem teilkonvertereigenen Sternpunktanschluss (X) des einen Teilkonverters (9) und dem teilkonvertereigenen Sternpunktanschluss (Y) des zumindest einen weiteren Teilkonverters (9) ein elektrischer Speicher (23) angeschlossen ist.

11. Umrichteranordnung nach einem der voranstehenden Ansprüche 7 bis 10,
**dadurch gekennzeichnet, dass**
zwischen dem teilkonvertereigenen Sternpunktanschluss (X) des einen Teilkonverters (9) und dem teilkonvertereigenen Sternpunktanschluss (Y) des zumindest einen weiteren Teilkonverters (9) ein elektrischer Verbraucher (23) angeschlossen ist.

12. Umrichteranordnung nach einem der voranstehenden Ansprüche 7 bis 11,
**dadurch gekennzeichnet, dass**
- die Umrichteranordnung einen Generator, insbesondere eine Asynchronmaschine (22), umfasst, die zumindest zwei generatorseitige Ausgangsdrehstromsysteme zur Verfügung stellt,
- eines der generatorseitigen Ausgangsdrehstromsysteme mit den umrichtereigenen Einspeisedrehstromanschlüssen (L1, L2, L3) verbunden ist und
- ein anderes generatorseitiges Ausgangsdrehstromsystem mit den umrichtereigenen Ausgabedrehstromanschlüssen (A, B, C) verbunden ist.

13. Umrichteranordnung nach einem der voranstehenden Ansprüche 7 bis 12,
**dadurch gekennzeichnet, dass**
- die parallelgeschalteten teilkonvertereigenen Ausgabedrehstromanschlüsse (A', B', C') interne umrichtereigene Ausgabedrehstromanschlüsse (A, B, C) bilden und
- jeder der umrichtereigenen Einspeisedrehstromanschlüsse (L1, L2, L3) jeweils mit einem der internen umrichtereigenen Ausgabedrehstromanschlüsse (A, B, C) elektrisch verbunden ist.

14. Verfahren zum Betreiben eines Umrichters (2) nach einem der voranstehenden Ansprüche,
**dadurch gekennzeichnet, dass**
- mit einem an die umrichtereigenen Einspeisedrehstromanschlüsse (L1, L2, L3) angeschlossenen Einspeisedrehstromsystem ein Drehstrom in den Umrichter (2) eingespeist wird und
- Submodule (13) in den Teilkonvertern (9) des Umrichters (2) derart angesteuert werden, dass an den parallelgeschalteten teilkonvertereigenen Ausgabedrehstromanschlüssen (A', B', C') ein Ausgabedrehstrom zur Verfügung steht und/oder zwischen den teilkonvertereigenen Sternpunktanschlüssen (X, Y) eine Gleichspannung oder eine einphasige Wechselspannung erzeugt wird.

## Claims

1. Converter (2) having a converter subunit (9), which has:
- three-phase supply terminals (L1', L2', L3'), located at the converter subunit, for connection to an electrical three-phase supply system, and
- converter subunit-located three-phase output terminals (A', B', C') that form a converter subunit-located three-phase output system, and
- a converter subunit-located starpoint terminal (X) for making contact with a star point of the converter subunit-located three-phase output system,
- wherein the converter (2) comprises at least one further converter subunit (9) that has converter subunit-located three-phase supply terminals (L1', L2', L3'), converter subunit-located three-phase output terminals (A', B', C') forming a converter subunit-located three-phase output system, and a converter subunit-located starpoint terminal (Y) for making contact with a star point of the converter subunit-located three-phase output system, and
- the converter subunits (9) are connected in parallel with respect to their converter subunit-located three-phase output terminals (A', B', C'), wherein
the converter subunits (9) are connected in parallel with respect to their the converter subunit-located three-phase supply terminals (L1', L2', L3'), and the parallel-connected converter subunit-located three-phase supply terminals (L1', L2', L3') form converter-located three-phase supply terminals (L1, L2, L3) for connection to one and the same three-phase supply system,
- wherein the converter subunit (9) and the further converter subunit (9) each have a respective converter module (10) for each converter subunit-located three-phase supply terminal,
- wherein each of the converter modules (10) has in each case a module-side three-phase supply terminal (Lm), a module-side neutral conductor terminal (Nm), a module-side three-phase output terminal (Am) and a module-side starpoint terminal (Sm),
- wherein the converter modules (10) each have two or more submodules (13) that are connected electrically in series on the output side, a transformer (17) having a primary winding (17a), and, for each submodule (13), a respective secondary winding (17b),
- wherein each of the submodules (13) is connected, on the input side, in each case individually to one of the secondary windings of the transformer,
- wherein the primary windings (17a) of the respective transformers (17) of the converter subunit (9) and/or the further convert subunit (9) are arranged in a star connection and are each connected to the converter subunit-located three-phase supply terminals (L1', L2', L3') in such a manner that the neutral conductor terminals (Nm) of the converter modules (10) that are on the module side are connected to one another and form a converter subunit-located neutral conductor terminal (N) of the respective converter subunit (9) and the three-phase supply terminals (Lm) that are on the module side each form one of the converter subunit-located three-phase supply terminals (L1', L2', L3') of the respective converter subunit (9),
- wherein the starpoint terminals (Sm) of the converter modules (10) that are on the module side are connected to one another and form the converter subunit-located starpoint terminal (X, Y) of the respective converter subunit (9),
- wherein the three-phase output terminals (Am) that are on the module side each form one of the converter subunit-located three-phase output terminals (A', B', C') of the respective converter subunit (9).

2. Converter (2) according to claim 1,
**characterised in that**
the subunit-located starpoint terminals (X, Y) make it possible to output a DC voltage or a single-phase AC voltage.

3. The converter (2) according to one of the preceding claims, the two or more submodules (13) of the converter modules (10) that are connected electrically in series on the output side are arranged between the module-side three-phase output terminal (Am) and the module-side starpoint terminal (Sm).

4. Converter (2) according to one of claims 1 to 3,
**characterised in that**
- one of the terminals of the primary winding (17a) of the transformer (17) forms a three-phase supply terminal on the module side, and
- another terminal of the primary winding (17a) of the transformer forms a neutral conductor terminal on the module side.

5. Converter (2) according to one of claims 1 to 4,
**characterised in that**
the submodules (13) each have a rectifier module (16), which is connected to a secondary winding of the transformer that is associated with the submodule (13), a capacitor module (15) that is downstream of the rectifier module (16), and an inverter module (14) that is downstream of the capacitor module (15).

6. Converter (2) according to one of preceding claims 1 to 5,
**characterised in that**
the connection of the submodules (13) electrically in series is based on the cascaded interconnection of the AC voltage terminals (AC1, AC2) of the inverter modules (14).

7. Converter arrangement,
**characterised in that**
it is equipped with at least one converter (2) according to one of the preceding claims.

8. Converter arrangement according to claim 7,
**characterised in that**
- the converter subunit-located three-phase output terminals (A', B', C') that are connected in parallel form converter-located three-phase output terminals (A, B, C), and
- the primary side of a three-to-two single-phase transformer (24) is connected to the converter-located three-phase output terminals (A, B, C).

9. Converter arrangement according to one of preceding claims 7 to 8,
**characterised in that**
- the converter subunit-located three-phase output terminals (A', B', C') that are connected in parallel form converter-located three-phase output terminals (A, B, C), and
- the converter-located three-phase output terminals (A, B, C) are connected to the primary side of a transformer (24) that is suitable for outputting two AC voltages with a phase offset of 90 degrees on its secondary side.

10. Converter arrangement according to one of preceding claims 7 to 9,
**characterised in that**
an electrical storage facility (23) is connected between the converter subunit-located starpoint terminal (X) of the one converter subunit (9) and the converter subunit-located starpoint terminal (Y) of the at least one further converter subunit (9).

11. Converter arrangement according to one of preceding claims 7 to 10,
**characterised in that**
an electrical consumer (23) is connected between the converter subunit-located starpoint terminal (X) of the one converter subunit (9) and the converter subunit-located starpoint terminal (Y) of the at least one further converter subunit (9).

12. Converter arrangement according to one of preceding claims 7 to 11,
**characterised in that**
- the converter arrangement comprises a generator, in particular an asynchronous machine (22) that provides at least two three-phase output systems on the generator side,
- one of the three-phase output systems on the generator side is connected to the converter-located three-phase supply terminals (L1, L2, L3), and
- another three-phase output system on the generator side is connected to the converter-located three-phase output terminals (A, B, C).

13. Converter arrangement according to one of preceding claims 7 to 12,
**characterised in that**
- the converter subunit-located three-phase output terminals (A', B', C') that are connected in parallel form internal converter-located three-phase output terminals (A, B, C), and
- each of the converter-located three-phase supply terminals (L1, L2, L3) is electrically connected to a respective one of the internal converter-located three-phase output terminals (A, B, C).

14. Method for operating a converter (2) according to one of the preceding claims,
**characterised in that**
- using a three-phase supply system that is connected to the converter-located three-phase supply terminals (L1, L2, L3), a three-phase current is supplied to the converter (2), and
- submodules (13) in the converter subunits (9) of the converter (2) are controlled such that an output three-phase current is provided at the converter subunit-located three-phase output terminals (A', B', C') that are connected in parallel and/or a DC voltage or single-phase AC voltage is generated between the converter subunit-located starpoint terminals (X, Y).

## Revendications

1. Onduleur (2) comprenant un convertisseur (9) partiel, qui a :
- des bornes (L1', L2', L3') de courant triphasé d'alimentation propres au convertisseur partiel pour la connexion à un système électrique d'alimentation à courant triphasé, ainsi que
- des bornes (A', B', C') de courant triphasé de sortie propres au convertisseur partiel, qui forment un système de sortie à courant triphasé propre au convertisseur partiel, et
- une borne (X) de point neutre propre au convertisseur partiel pour la mise en contact d'un point neutre du système de sortie à courant triphasé propre au convertisseur partiel,
- dans lequel l'onduleur (2) comprend au moins un autre convertisseur (9) partiel, qui a des bornes (L1', L2', L3') d'alimentation propres au convertisseur partiel de courant triphasé, des bornes (A', B', C') de sortie de courant triphasé propres au convertisseur partiel, qui forment un système de sortie propre au convertisseur partiel de courant triphasé, et une borne (Y) de point neutre propre au convertisseur partiel pour la mise en contact d'un point neutre du système de sortie propre au convertisseur partiel de courant triphasé, et
- les convertisseurs (9) partiels sont, en ce qui concerne leurs bornes (A', B', C') de sortie de courant triphasé propres au convertisseur partiel, montés en parallèle,
dans lequel
les convertisseurs (9) partiels sont, en ce qui concerne leurs bornes (L1', L2', L3') d'alimentation de courant triphasé propres au convertisseur partiel, montés en parallèle et les bornes (L1', L2', L3') d'alimentation propres au convertisseur partiel de courant triphasé montées en parallèle forment des bornes (L1, L2, L3) d'alimentation de courant triphasé propres à l'onduleur de connexion à un et même système de courant triphasé d'alimentation,
- dans lequel le convertisseur (9) partiel et l'autre convertisseur (9) partiel ont chacun un module (10) de convertisseur par bornes d'alimentation de courant triphasé propres au convertisseur partiel,
- dans lequel chacun des modules (10) de convertisseur a respectivement une borne (Lm) d'alimentation de courant triphasé du côté du module, une borne (Nm) de conducteur neutre du côté du module, une borne (Am) de courant triphasé de sortie et une borne (Sm) de point de neutre du côté du module,
- dans lequel les modules (10) de convertisseur ont chacun deux ou plusieurs sous-module (13) montés électriquement en série du côté de la sortie, un transformateur (17) ayant un enroulement (17a) primaire et par sous-module (13) respectivement un enroulement (17b) secondaire,
- dans lequel chacun des sous-module (13) est connecté du côté de l'entrée respectivement individuellement à l'un des enroulements secondaires du transformateur,
- dans lequel les enroulements (17a) primaires des transformateurs (17) respectifs du convertisseur (9) partiel et/ou de l'autre convertisseur (9) partiel sont montés en un circuit en étoile et sont connectés respectivement aux bornes (L1', L2', L3') d'alimentation de courant triphasé propres au convertisseur partiel, de manière à ce que les bornes (Nm) de conducteur neutre du côté du module du module (10) de convertisseur soient connectées entre elles et de manière à former la borne (N) de conducteur neutre propre au convertisseur partiel du convertisseur (9) partiel respectif et les bornes (Lm) d'alimentation de courant triphasé du côté du module forment chacune l'une des bornes (L1', L2', L3') d'alimentation de courant triphasé propres au convertisseur partiel du convertisseur (9) partiel respectif,
- dans lequel les bornes (Sm) de point neutre du côté du module des modules (10) de convertisseur sont connectées entre elles et forment la borne (X, Y) de point de neutre propre au convertisseur partiel du convertisseur (9) partiel respectif,
- dans lequel les bornes (Am) de sortie de courant triphasé du côté du module forment respectivement l'une des bornes (A', B', C') de sortie de courant triphasé propres au convertisseur partiel du convertisseur (9) partiel respectif.

2. Onduleur (2) suivant la revendication 1,
**caractérisé en ce que**
les bornes (X, Y) de point neutre propres au convertisseur partiel permettent une sortie d'une tension continue ou d'une tension alternative monophasée.

3. Onduleur (2) suivant l'une des revendications précédentes, dans lequel deux ou plusieurs sous-modules (13), montés en série électriquement du côté de la sortie, du module (10) de convertisseur sont disposés entre la borne (Am) de sortie de courant alternatif du côté du module et la borne (Sm) de point neutre du côté du module.

4. Onduleur (2) suivant l'une des revendications 1 à 3,
**caractérisé en ce que**
- l'une des bornes de l'enroulement (17a) primaire du transformateur (17) forme une borne d'alimentation de courant triphasé du côté du module, et
- une autre borne de l'enroulement (17a) primaire du transformateur forme une borne de conducteur neutre du côté du module.

5. Onduleur (2) suivant l'une des revendications 1 à 4,
**caractérisé en ce que**
les sous-modules (13) ont chacun un module (16) redresseur, qui est connecté à un enroulement secondaire, associé au sous-module (13), du transformateur, un module (15) condensateur monté en aval du module (16) redresseur et un module (14) onduleur monté en aval du module (15) condensateur.

6. Onduleur (2) suivant l'une des revendications 1 à 5 précédentes,
**caractérisé en ce que**
le circuit électrique série des sous-modules (13) repose sur la connexion en cascade des bornes (AC1, AC2) de tension alternative des modules (14) onduleurs.

7. Agencement d'onduleur,
**caractérisé en ce que**
celui-ci est équipé d'au moins un onduleur (2) suivant l'une des revendications précédentes.

8. Agencement d'onduleur suivant la revendication 7,
**caractérisé en ce que**
- les bornes (A', B', C') de courant alternatif de sortie propres au convertisseur partiel montées en parallèle forment des bornes (A, B, C) de sortie de courant triphasé propres à l'onduleur et,
- aux bornes (A, B, C) de sortie de courant triphasé propres à l'onduleur, est connecté le côté primaire d'un transformateur (24) à trois sur deux phases.

9. Agencement d'onduleur suivant l'une des revendications 7 à 8 précédentes,
**caractérisé en ce que**
- les bornes (A', B', C') de sortie de courant triphasé propres au convertisseur partiel montées en parallèle forment des bornes (A, B, C) de sortie de courant triphasé propres à l'onduleur,
- les bornes (A, B, C) de sortie de courant triphasé propres à l'onduleur sont connectées au côté primaire d'un transformateur (24), qui est propre à donner, sur son côté secondaire, deux tensions alternatives ayant un déphasage de 90 degrés.

10. Agencement d'onduleur suivant l'une des revendications 7 à 9 précédentes,
**caractérisé en ce que**
un accumulateur (23) électrique est connecté entre la borne (X) de point neutre propre au convertisseur partiel de l'un des convertisseurs (9) partiels et la borne (Y) de point neutre propre au convertisseur partiel d'au moins un autre convertisseur (9) partiel.

11. Agencement d'onduleur suivant l'une des revendications 7 à 10 précédentes,
**caractérisé en ce qu'**
un consommateur (23) électrique est connecté entre la borne (X) de point neutre propre au convertisseur partiel du un convertisseur (9) partiel et la borne (Y) de point neutre propre au convertisseur partiel du au moins un autre convertisseur (9) partiel.

12. Agencement d'onduleur suivant l'une des revendications 7 à 11,
**caractérisé en ce que**
- l'agencement d'onduleur comprend un générateur, en particulier une machine (22) asynchrone, qui dispose d'au moins deux systèmes de sortie de courant triphasé du côté du générateur,
- l'un des systèmes de sortie de courant triphasé du côté du générateur est connecté aux bornes (L1, L2, L3) d'alimentation de courant triphasé propres à l'onduleur, et
- un autre système de sortie de courant triphasé du côté du générateur est connecté aux bornes (A, B, C) de sortie de courant triphasé propres à l'onduleur.

13. Agencement d'onduleur suivant l'une des revendications 7 à 12 précédentes,
**caractérisé en ce que**
- les bornes (A', B', C') de sortie de courant triphasé propres au convertisseur partiel montées en parallèle forment des bornes (A, B, C) de sortie de courant triphasé internes propres à l'onduleur, et
- chacune des bornes (L1, L2, L3) d'alimentation de courant triphasé propres à l'onduleur est connectée électriquement respectivement à l'une des bornes (A, B, C) de sortie de courant triphasé internes propres à l'onduleur.

14. Procédé pour faire fonctionner un onduleur (2) suivant l'une des revendications précédentes,
**caractérisé en ce que**
- l'on injecte un courant triphasé dans l'onduleur (2) par un système d'alimentation de courant triphasé connecté aux bornes (L1, L2, L3) d'alimentation de courant triphasé propres à l'onduleur, et
- l'on commande des sous-modules (13) dans les convertisseurs (9) partiels de l'onduleur (2), de manière à disposer d'un courant triphasé de sortie aux bornes (A', B', C') de sortie de courant triphasé propres au convertisseur partiel montées en parallèle et/ou à produire une tension continue ou une tension alternative monophasée entre les bornes (X, Y) de point neutre propres au convertisseur partiel.
